Europäisches Patentamt

European Patent Office

Office européen des brevets

(11) Publication number: **0 134 138**
**B1**

# (12) EUROPEAN PATENT SPECIFICATION

(45) Date of publication of patent specification: **12.07.89**

(51) Int. Cl.⁴: **C 04 B 35/00**

(21) Application number: **84305442.0**

(22) Date of filing: **09.08.84**

(54) Making refractory units.

(30) Priority: **01.09.83 GB 8323501**

(43) Date of publication of application:
**13.03.85 Bulletin 85/11**

(45) Publication of the grant of the patent:
**12.07.89 Bulletin 89/28**

(84) Designated Contracting States:
**BE DE FR GB IT NL**

(56) References cited:
US-A-3 679 605
US-A-4 036 784
US-A-4 267 086

(73) Proprietor: **IMPERIAL CHEMICAL INDUSTRIES PLC**
**Imperial Chemical House Millbank**
**London SW1P 3JF (GB)**

(72) Inventor: **Ralph, Donald Leslie**
**51 Malvern Road**
**Billingham Cleveland (GB)**

(74) Representative: **Chapman, Kenneth Hazel et al**
**Imperial Chemical Industries PLC Legal**
**Department: Patents P.O. Box 6 Bessemer Road**
**Welwyn Garden City Herts, AL71HD (GB)**

EP 0 134 138 B1

Courier Press, Leamington Spa, England.

# EP 0 134 138 B1

## Description

This invention relates to a method of making refractory units by extrusion.

Compositions to be extruded to make refractory units commonly include a clay mineral to provide suitable rheological and bonding properties, as well as a water-soluble polymer such as starch or cellulose ether or polyvinyl alcohol. This is unsatisfactory for making units of high purity material. Thus for example in making alumina-supported steam reforming catalyst, such clay minerals introduce silica, which is volatile in hot steam.

We have now found that the clay mineral can be at least partly omitted provided a defined combination of water soluble polymers is used.

Accordingly the present invention provides a method of making a shaped refractory unit which comprises extruding a composition comprising at least one powdered refractory oxidic material or compound thermally decomposable or reactable thereto, water, and at least one polymer then calcining the extrudate to burn out said polymer, to bond the refractory material together, and to adjust its micromeritic properties, wherein all the components present are subtantially silica-free, and said at least one polymer comprises at least one hydrophilic polymer (A) and at least one hydrophilic polymer (B), wherein polymer (A) is subject to shear thinning, having an apparent viscosity at a shear rate of 100 $s^{-1}$ in the range 3 to 6 times as great as at a shear rate of 1000 $s^{-1}$, measured on a 1% w/w aqueous solution at 25°C, and is not strongly if at all self adhesive, and polymer (B) is strongly self adhesive, and may or may not be subject to shear-thinning, having an apparent viscosity at a shear rate of 100 $s^{-1}$ up to 2.5 times as great as at a shear rate of 1000 $s^{-1}$ measured on a 1% w/w aqueous solution at 25°C.

The refractory oxide can be for example alumina (preferably alpha, but possibly a hydratable alumina, especially with a hydration inhibiting coating), magnesia-alumina spinel, calcium aluminate, zirconia, titania, silicon carbide and combinations thereof. Preferably its surface area is under 20 $m^2g^{-1}$, for example it is preferably in a dead-burned state, in the composition before extrusion. Preferably it is in particles of diameter under 90, especially under 45 microns. Preferably the particle size distribution is such that the smaller particles present substantially fill the spaces between the larger particles. If a reactable compound is present it can be for example a nitrate. All components present are preferably substantially silica-free (under 0.5% w/w $SiO_2$): this is possible because by use of the two polymers the composition need not contain clay.

The composition containing powdered refractory oxidic material or compound thermally decomposable or reactable thereto and polymers of types A and B, without or with water, constitute a further feature of the invention.

The shear-thinning property is expressed numerically by measuring the shear stress (tau) over a range of shear rates D and comparing the tau/D ratio at a low shear rate (100 $sec^{-1}$) with that ratio at a high shear rate, 1000 $sec^{-1}$, using a 1% w/w aqueous solution at 25°C. This ratio is conventionally referred to as the "apparent viscosity". Typical values of apparent viscosity for a series of polymer, as measured using a Haake Rotovisko MVI System viscometer with a 500 g cm hydrostatic head are shown in Table 1.

TABLE 1

| Polymer | Shear rate $sec^{-1}$ | | | |
| --- | --- | --- | --- | --- |
| | 100 | | 1000 | |
| | Shear stress $Nm^{-2}$ | App. visc. $Nsm^{-2}$ | Shear stress $Nm^{-2}$ | App. visc. $Nsm^{-2}$ |
| Type A *"ZUSOPLAST" PSI | 39 | 0.39 | 78 | 0.078 |
| GUAR gum | 18 | 0.18 | 44 | 0.044 |
| Xanthan gum | 21 | 0.21 | 38 | 0.038 |
| Type B *"KORDEK" (soluble starch) | 1.0 | 0.01 | 5.0 | 0.005 |

*The names "ZUSOPLAST" and "KORDEK" are registered as Trade Marks in many countries. ("ZUSOPLAST PSI" is an organic polymer extrusion aid supplied by Zschimmer and Schwarz of Lahnstein am Rhein, Federal German Republic).

The type A polymers have an apparent viscosity, as measured in the above conditions, which at a shear rate of 100 $sec^{-1}$ is 3 to 6, times as great as at a shear rate of 1000 $sec^{-1}$. Further, it may contribute to the plastic viscosity of the composition and typically has a plastic viscosity, measured as the differential ratio of shear stress to shear rate at a shear rate of 1000 sec$^{-1}$ in the above conditions, in the range 0.005 to 0.1 Nsm$^{-2}$. Thus the type A polymer provides a high yield stress, resulting in a rigid not readily deformed green extrudate, but does not produce an excessively stiff starting composition.

Type B polymer is less subject to shear thinning than polymer A. Its apparent viscosity measured in the above conditions is at a shear rate of 100 sec$^{-1}$ is up to 2.5 times as great as at a shear rate of 1000 sec$^{-1}$, and may be considerably lower, for example equal thereto: that is, it may exhibit Newtonian viscosity. Its plastic viscosity, measured as above, is preferably in the range 0.002 to 0.1 Nsm$^{-2}$, when that of the type A polymer is in the preferred range.

In the composition to be extruded the complementary properties of types A and B are such as to give substantially plug flow, with consequent ready adaptation to guiding surfaces in the extrusion die yet ample cohesiveness following changes of cross-sectional shape. Thus polymer A chiefly controls the body properties of the composition and polymer B the properties of the surface of the composition, especially in so far as it contacts guide surface in the die or re-unites after splitting. One practical result of the presence of polymer type B is to make it possible to readily screw-extrude a composition which, if it contained polymer only of type A, would be a practical proposition only for ram extrusion.

The proportion of total polymer to total refractory solids is typically in the range 5—20% w/w. The proportion of polymer A to polymer B is typically in the range 0.2 to 1.5. These proportions are preferred when polymer A is a xanthan gum and polymer B is soluble starch and with the aid of viscometry can be adjusted to permit use of other polymers. Variations arise according to polymer quality, especially if it is a natural product, and to the particle size, size distribution, shape and hydratability of the other solids present, hence optimisation by simple trials is usually desirable.

The method is especially applicable when, by reason of die design, for mechanical reasons or dictated by the intended shapes of the extrudate, the stream of composition is, upstream of the shaping zone of the die, split into discrete substreams, which have to be re-united to produce the extrudate. Thus for example, in making a tubular extrudate, one or more cores may be suspended from a supporting bridge such as a spider, or may project from a back plate having feed holes, or may themselves each be provided with a feed hole.

Thus the invention is used preferably for making refractory units whose shape is tubular, with at least 0.15 and typically up to 93 or more commonly up to 7.75 through-passages per cm$^2$. Examples are tubes of diameter and height in the range 3—20 especially 5—12 mm with height between half and double the diameter. Other examples are multi-hole cylinders having for example 3—9 passages defined by radial or intersecting chordal partitions. In such tubes or units the walls are typically of thickness 0.25 to 3 mm and they are normally to be used in random-packed catalyst beds. If desired, units having 10 or more, especially 50 or more, passages can be used in random packed beds, but more commonly they are larger, for example of diameter at least 50 mm and up to 300 mm or more and are to be used as a monolith filling the width of the catalyst bed. In the latter event, wall thickness in the range 0.2 to 1.0 mm are preferred. For a wide catalyst bed the extrudates need not be over-all cylindrical but can be shaped or cut so as side-by-side to occupy the width of the catalyst bed. A typical unit length is 100—500 mm.

As examples of type A polymers there may be mentioned the following:

drilling-mud polymers

xanthan gums

heteropolysaccharides made by fermentation, e.g. from Alcaligenes cultures

Guar gum

strongly shear-thinning varieties of polyvinyl alcohols, esters and ethers poly(meth) acrylates and poly(meth) acrylamides

strongly shear-thinning varieties of naturally-derived carbohydrates

lightly cross-linked polymers not otherwise subject to shear thinning.

As examples of type B polymers there may be mentioned the following:

weakly shear-thinning varieties of polyvinyl alcohols, esters and ethers poly(meth) acrylates and poly(meth) acrylamides

weakly shear-thinning varieties of naturally-derived carbohydrates, for example solubilised starch and dextran

latices of polyvinyl esters and ethers or of poly(meth) acrylic esters

In each use the extent of shear-thinning is determined as described above.

Whichever type of polymer is used (apart from the latices), it can be swellable if not fully soluble in water, provided an adequately homogeneous extrudable composition can be made from it.

After extrusion the extrudate is dried and calcined to burn out the polymers, form ceramic bonds and adjust the micromeritic properties of the oxidic material. The calcination burns out the polymers at intermediate temperatures, for example 400—800°C, whereafter the final calcination temperature is typically in the range 1000—2000, especially 1200—1700°C, and results in a surface area preferably under 15, especially under 0.5 m$^2$g$^{-1}$.

The invention provides in particular the following catalysts on supports made by the method:

(a) a high temperature hydrocarbon steam reforming catalyst in which the active metal is from Group VIII of the Periodic Table and there is preferably also an oxidic secondary support of surface area in the

3

EP 0 134 138 B1

range 15—300 $m^2g^{-1}$. Such a catalyst can be random packable as described in EPA 45126 or monolithic if intended for an adiabatic system.

(b) a catalyst for oxidising hydrocarbons, for example to generate heat or to remove hydrocarbons from waste gases to be discharged to atmosphere.

Example 1

The following dry components were thoroughly mixed:

| | |
|---|---|
| alpha alumina "Universal" grade 1200 | 2000 g |
| alpha alumina "Universal" grade 600 | 1850 g |
| alpha alumina "Universal" grade 320 | 1150 g |

(These aluminas are highly calcined, with a surface area less than 0.5 $m^2g^{-1}$ and their maximum particle diameter is 45 microns. The size distribution ensures that the smaller particles substantially fill the spaces between the larger ones).

An extrudable composition as follows:

| | |
|---|---|
| alumina mixture as above | 500 g |
| type A polymer ("ZUSOPLAST PSI") | 15 g |
| type B polymer ("KORDEK" 08010 soluble starch) | 40 g |
| wetting agent | 1 drop |
| water | 130 g |

was made by mixing the dry components for 20 minutes, adding water and pug-milling twice through a mincing disc.

The composition was ram-extruded through a die machined from a single metal block and having the following properties:

Outlet orifice: interconnecting slots 0.8 mm wide defined by 25 square-section cores of 3.5 mm side and an exterior wall;

Feed means: holes each 3.2 mm diameter and in line with a slot intersection;

land length: 8 mm

Feed hole length: 9.5 mm

The extrudate velocity and applied pressure at 4 levels of ram speed were as shown in Table 2:

TABLE 2

| Ram speed cm $sec^{-1}$ | Extrudate velocity cm $sec^{-1}$ | Applied pressure kg $cm^{-1}$ |
|---|---|---|
| 0.017 | 0.179 | 8.5 |
| 0.034 | 0.357 | 9.5 |
| 0.085 | 0.895 | 11.0 |
| 0.17 | 1.79 | 12.5 |

The relatively low applied pressure signifies that a screw extruder could equally have been used. (This was confirmed in later experiments). At each ram speed the extrudate was free of splitting and surface defects from the start to the end of the ram barrel charge.

Samples of extrudate were dried in a forced air stream at 50°C, then heated in an oven for 12 hours, then calcined at 1500°C for 3 hours. A few cracks, affecting up to 20% of the sample, were observed. The micromeritic properties were as follows:

| | |
|---|---|
| Surface area | 0.4 $m^2g^{-1}$ |
| helium density | 3.86 g $cm^{-3}$ |
| mercury density | 2.08 g $cm^{-3}$ |
| pore volume | 0.22 $cm^3g^{-1}$ |
| pore radius | 11000 Å (1.1 μm) |

Thus this material is suitable as a primary support for a steam reforming catalyst.

In control experiments using only one of the polymers less (in some cases none) of the extrudate was usable, as the result of flow distortion during extrusion and of further splitting and cracks formed during

4

drying and calcination. Further, a corresponding composition containing polymer A but no polymer B could not be conveyed by screw but only by a ram.

Example 2

The following dry components were thoroughly mixed:

| | |
|---|---|
| alpha alumina ("ALCOA" grade A14, soda content 235 ppm as Na) | 700 g |
| type A polymer as in Example 1 | 35 g |
| type B polymer as in Example 1 | 35 g |

Then water (130 g) and 1 drop of wetting agent were added. The wet mixture was pug-milled, then extruded through a suspended-core die of 8 mm external diameter and 2.5 mm wall thickness. The tube was cut off in 250 mm lengths, dried slowly, and calcined at 1450°C for 4 hours. The calcined pieces were cut with a diamond saw into 8 mm lengths. No splitting or surface defects were observed before calcination and very few cracks developed in calcination.

The pieces had the following micromeritic properties:

| | |
|---|---|
| Surface area | $0.48 \ m^2g^{-1}$ |
| pore volume | $0.29 \ cm^3g^{-1}$ |

The material is suitable as a support for a catalyst to be used in a random-packed bed.

Example 3

An extrudable composition was made by mixing the following components dry:

| | |
|---|---|
| alpha alumina (Ramsden's G6049) | 5000 g |
| type A polymer as in Example 1 | 150 g |
| type B polymer as in Example 1 | 800 g |

adding further alumina (61 g) in the form of 1160 ml of a solution of 1000 g of aluminium nitrate nonahydrate in 2000 ml of water and pug-milling the wet mixture twice. It was then extruded into a honeycomb using the die described in Example 1 from a screw extruder at a pressure of 20 kg $cm^{-1}$. The extrudate was cut green into short lengths, dried in a forced air oven, then overnight at 100°C, and heated at 100°C $h^{-1}$ to 1500°C, at which temperature it was held for 4 h. The product was of high quality apart from a small number of transverse hairline cracks.

The calcined extrudate is suitable for use as a support for a hydrocarbon steam reforming catalyst.

**Claims**

1. A method of making a shaped refractory unit which comprises extruding a composition comprising at least one powdered refractory oxidic material or compound thermally decomposable or reactable thereto, water, and at least one polymer then calcining the extrudate to burn out said polymer, to bond the refractory material together, and to adjust its micromeritic properties characterised in that all the components present are substantially silica-free, and that said at least one polymer comprises at least one hydrophilic polymer (A) and at least one hydrophilic polymer (B), wherein polymer (A) is subject to shear thinning, having an apparent viscosity at a shear rate of 100 $s^{-1}$ in the range 3 to 6 times as great as at a shear rate of 1000 $s^{-1}$, measured on a 1% w/w aqueous solution at 25°C, and is not strongly if at all self adhesive, and polymer (B) is strongly self adhesive, and may or may not be subject to shear-thinning, having an apparent viscosity at a shear rate of 100 $s^{-1}$ up to 2.5 times as great as at a shear rate of 1000 $s^{-1}$ measured on a 1% w/w aqueous solution at 25°C.

2. A method according to claim 1 in which polymer A has a plastic viscosity in the range 0.005 to 0.1 Ns $m^{-2}$ measured on a 1% w/w aqueous solution at 25°C and at a shear rate of 1000 $s^{-1}$.

3. A method according to any one of the preceding claims in which polymer B has a plastic viscosity in the range 0.002 to 0.1 Ns $m^{-2}$, measure on a 1% w/w aqueous solution at 25°C and at a shear rate of 1000 $s^{-1}$.

4. A method according to any one of the preceding claims in which the extrusion operation includes splitting a stream of the composition into discrete substreams and reuniting them to produce the extrudate.

5. A method according to claim 4 in which the extrudate is tubular with 0.15 to 93 through-passages per $cm^2$.

**Patentansprüche**

1. Verfahren zur Herstellung eines feuerfesten Formteils, bei dem eine Mischung, die mindestens ein pulverförmiges, feuerfestes oxidisches Material oder eine Verbindung, die dazu thermisch zersetzt oder umgesetzt werden kann, Wasser und mindestens ein Polymer enthält, extrudiert wird, das Extrudat dann calciniert wird, um das erwähnte Polymer auszubrennen, das feuerfeste Material zu verbinden und seine porosimetrischen Eigenschaften einzustellen, dadurch gekennzeichnet, daß alle vorhandenen Bestandteile im wesentlichen siliciumdioxidfrei sind und daß das erwähnte mindestens eine Polymer mindestens ein hydrophiles Polymer (A) und mindestens ein hydrophiles Polymer (B) enthält, wobei das Polymer (A) bei stärkerer Scherwirkung dünnflüssiger wird und bei einer Schergeschwindigkeit von 100 s$^{-1}$ eine scheinbare Viskosität, gemessen bei einer 1%igen (Masse/Masse) wäßrigen Lösung bei 25°C, hat, die 3- bis 6 mal so hoch ist wie bei einer Schergeschwindigkeit von 1000 s$^{-1}$, und nicht oder nicht stark selbstklebend ist und das Polymer (B) stark selbstklebend ist und bei stärkerere Scherwirkung dünnflüssiger wird oder nicht und bei einer Schergeschwindigkeit von 100 s$^{-1}$ eine scheinbare Viskosität, gemessen bei einer 1%-igen (Masse/Masse) wäßrigen Lösung bei 25°C, hat, die bis zu 2,5mal so hoch ist wie bei einer Schergeschwindigkeit von 1000 s$^{-1}$.

2. Verfahren nach Anspruch 1, bei dem das Polymer A eine plastische Viskosität von 0,005 bis 0,1 N.s.m$^{-2}$, gemessen bei einer 1%igen (Masse/Masse) wäßrigen Lösung bei 25°C und bei einer Schergeschwindigkeit von 1000 s$^{-1}$, hat.

3. Verfahren nach einem der vorhergehenden Ansprüche, bei dem das Polymer B eine plastische Viskosität von 0,002 bis 0,1 N.s.m$^{-2}$, gemessen bei einer 1%igen (Masse/Masse) wäßrigen Lösung bei 25°C und bei einer Schergeschwindigkeit von 1000 s$^{-1}$, hat.

4. Verfahren nach einem der vorhergehenden Ansprüche, bei dem der Extrusionsvorgang die Teilung eines Stromes der Mischung in getrennte Unterströme und deren Wiedervereinigung zur Herstellung des Extrudats umfaßt.

5. Verfahren nach Anspruch 4, bei dem das Extrudat röhrenförmig ist und 0,15 bis 93 Durchgänge je cm$^2$ hat.

**Revendications**

1. Procédé pour fabriquer une unité réfractaire façonnée, qui comprend l'extrusion d'une composition comprenant au moins un matériau pulvérulent de type oxyde réfractaire ou un composé pouvant être décomposé par la chaleur ou réagir en donnant celui-ci, de l'eau et au moins un polymère, puis la calcination de l'extrudat pour éliminer par combustion le polymère, afin de lier le matériau réfractaire et d'ajuster ses propriétés microméritiques, caractérisé en ce que tous les composants présents sont pratiquement dépourvus de silice, et que ce polymère au moins présent comprend au moins un polymère hydrophile (A) et au moins un polymère hydrophile (B), dans lequel le polymère (A) est sujet à un allongement par cisaillement, ayant une viscosité apparente à un taux de cisaillement de 100 s$^{-1}$ de 3 à 6 fois plus grande qu'à un taux de cisaillement de 1000 s$^{-1}$, mesurée sur une solution aqueuse à 1% en p/p à 25°C et n'est pas fortement auto-adhésif s'il l'est même, et le polymère (B) est fortement auto-adhésif, et peut ou non être sujet à un allongement par cisaillement, ayant une viscosité apparente à un taux de cisaillement de 100 s$^{-1}$ jusqu'à 2,5 fois plus grande qu'à un taux de cisaillement de 1000 s$^{-1}$ mesurée sur une solution aqueuse à 1% en p/p à 25°C.

2. Procédé suivant la revendication 1, dans lequel le polymère A a une viscosité plastique dans la gamme de 0,005 à 0,1 Ns m$^{-2}$ mesurée sur une solution aqueuse à 1% en p/p à 25°C et à un taux de cisaillement de 1000 s$^{-1}$.

3. Procédé suivant l'une des revendications précédentes, dans lequel le polymère B a une viscosité plastique dans la gamme de 0,002 à 0,1 Ns m$^{-2}$ mesurée sur une solution aqueuse à 1% en p/p à 25°C et à un taux de cisaillement de 1000 s$^{-1}$.

4. Procédé suivant l'une des revendications précédentes, dans lequel l'opération d'extrusion comprend la séparation d'un courant de la composition en sous-courants discrets et leur réunion pour produire l'extrudat.

5. Procédé suivant la revendication 4, dans lequel l'extrudat est tubulaire, traversé par 0,15 à 93 passages par cm$^2$.